(19) Europäisches Patentamt
European Patent Office
Office européen des brevets

(11) Veröffentlichungsnummer: **0 473 905 A2**

(12) **EUROPÄISCHE PATENTANMELDUNG**

(21) Anmeldenummer: **91111492.4**

(51) Int. Cl.5: **C08G 59/56**

(22) Anmeldetag: **10.07.91**

(30) Priorität: **06.09.90 DE 4028287**

(43) Veröffentlichungstag der Anmeldung:
**11.03.92 Patentblatt 92/11**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Gras, Rainer, Dr.**
**Im Ostholz 49 a**
**W-4630 Bochum 5(DE)**
Erfinder: **Wolf, Elmar, Dr.**
**Stauffenbergstrasse 7**
**W-4350 Recklinghausen(DE)**

(54) **Bei Raumtemperatur härtbare Epoxidharzmischungen.**

(57) Die Erfindung betrifft bei Raumtemperatur härtbare Epoxidharzmischungen, bestehend aus

(A) Polyepoxiden mit mehr als einer Epoxidgruppe pro Molekül

(B) aliphatischen, (cyclo)-aliphatischen Polyaminen mit mehr als zwei am Stickstoff der Aminogruppen gebundenen aktiven Wasserstoffatomen,

(C) einem Umsetzungsprodukt mit einem mittleren Molekulargewicht von 500 bis 8 000 aus

c 1) einem Polyalkylenetherpolyol aus Alkylenoxiden und/oder bi- oder polyfunktionellen Alkoholen bzw. aus Alkylenoxiden und Aminen mit

c 2) einem (cyclo)-aliphatischen Diisocyanat im NCO/OH-Verhältnis von 2 : 1,

blockiert mit einem bestimmten sterisch gehinderten Piperidin-Derivat,

D) üblichen Füllstoffen, Pigmenten, Reaktionsbeschleunigern und Viskositätsreglern.



Rank Xerox (UK) Business Services

Die vorliegende Erfindung betrifft bei Raumtemperatur härtbare Epoxidharzmischungen, bestehend aus EP-Harzen auf Bisphenol-A-Basis, (cyclo)-aliphatischen Polyaminen mit mehr als 2 H-Atomen im Molekül und Polyetherpolyol-Diisocyanat-Präpolymeren, deren freie NCO-Gruppen mit speziellen Piperidin-Derivaten blockiert sind.

Die mit Polyaminen gehärteten EP-Harze zeichnen sich in der Praxis durch eine Reihe von erwünschten Eigenschaften aus, wie z. B. gute Haftung auf allen möglichen Substraten, gute Lösungsmittelbeständigkeit und hohe Resistenz gegenüber Chemikalieneinwirkung. Infolge ihrer hohen Vernetzungsdichte sind amingehärtete EP-Harze vor allem auf Bisphenol-A-Basis aber spröde, mit Glasübergangstemperaturen oberhalb 20 °C, und müssen daher vor allem bei Anwendungen, für die Schlag- und Stoßfestigkeit und hohe Flexibilität erforderlich sind, flexibilisiert werden.

Die am häufigsten zur Flexibilisierung von kaltgehärteten Amin/EP-Harz-Massen eingesetzten Verbindungen sind die in der DE-OS 21 52 606 beschriebenen aromatischen Carbamidsäurearylester, die bei der Härtung von EP-Harzen und Polyaminen mit in das polymere Netzwerk eingebunden werden, da die Aminogruppen mit den Carbamidsäureestergruppen unter Freisetzung von Alkylphenol reagieren.

Ein entscheidender Nachteil dieser mit Carbamidsäureester flexibilisierten amingehärteten EP-Harze ist ihre langsame Aushärtung bei Raumtemperatur (RT), da die Aminogruppen bei RT wesentlich langsamer mit den Carbamidsäureestergruppen als mit den EP-Gruppen reagieren.

Aufgabe der vorliegenden Erfindung war es, diesen Nachteil zu überwinden und bei RT härtbare Epoxidharzmischungen zu finden, die schnell zu chemikalienfesten, gut haftenden Überzügen, Klebstoffen, Dichtungsmassen und Formteilen mit hoher Schlag- und Stoßfestigkeit aushärten.

Diese Aufgabe wurde durch den Einsatz von mittels spezieller Piperidin-Derivate blockierten Polyisocyanaten bei amingehärteten Epoxidharzen gelöst.

Gegenstand der Erfindung sind daher bei Raumtemperatur härtbare Epoxidharzmischungen, bestehend aus

(A) Polyepoxiden mit mehr als einer Epoxidgruppe pro Molekül

(B) aliphatischen, (cyclo)-aliphatischen Polyaminen mit mehr als zwei am Stickstoff der Aminogruppen gebundenen aktiven Wasserstoffatomen,

(C) einem Umsetzungsprodukt mit einem mittleren Molekulargewicht von 500 bis 8 000 aus

c 1) einem Polyalkylenetherpolyol aus Alkylenoxiden und/oder bi- oder polyfunktionellen Alkoholen bzw. aus Alkylenoxiden und Aminen mit

c 2) einem (cyclo)-aliphatischen Diisocyanat im NCO/OH-Verhältnis von 2 : 1,

blockiert mit einem Piperidin-Derivat der folgenden Formeln

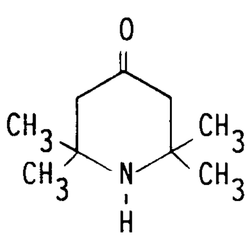 (I) oder 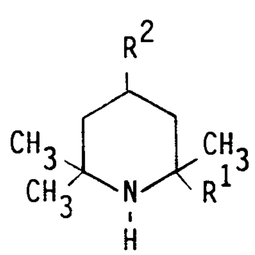 (II)

wobei $R^1$ = H, $CH_3$

$$R^2 = H,\ OH,\ (-O)_n\text{-}R^3,\ (-O\text{-}\overset{O}{\overset{\|}{C}})_n\text{-}R^3,\ \underset{H}{-N}\text{-}\overset{O}{\overset{\|}{C}}\text{-}R^3,\ -N(CH_3)_2,$$

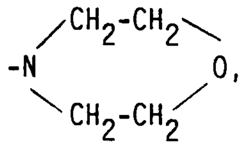

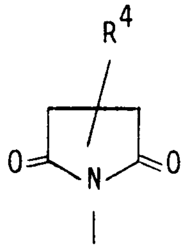 , 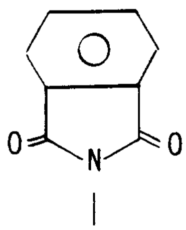 , 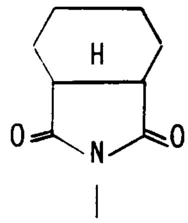 ,

n = 1,2
$R^3$ = $C_1$-$C_{18}$-Alkyl, wenn n = 1 und
$R^3$ = $C_2$-$C_{18}$-Alkylen, wenn n = 2
$R^4$ = H, $C_1$-$C_{20}$-Alkyl und gegebenenfalls
D) üblichen Füllstoffen, Pigmenten, Reaktionsbeschleunigern und Viskositätsreglern.

Die zu verwendenden Flexibilisatoren C) sind Reaktionsprodukte aus linearen oder verzweigten Polyalkylenetherpolyolen und (cyclo)-aliphatischen Diisocyanaten, wobei pro OH-Äquivalent des Polyetherpolyols 2 NCO-Äquivalente des Diisocyanats zur Reaktion kommen, und die freien NCO-Gruppen mit Piperidin-Derivaten der Formel (I) und (II) blockiert sind.

Als lineare oder verzweigte Polyolkomponenten kommen die Polyalkylenpolyetherpolyole mit mittleren Molekulargewichten von 200 bis 7 000 infrage, wie sie durch Copolymerisation, Blockcopolymerisation oder anionische Polymerisation von Alkylenoxiden, wie insbesonders Ethylenoxid, Propylenoxid, mit di- oder polyfunktionellen Alkoholen, wie Ethylenglykol, Propandiol-1,3, Butandiol, Trimethylolpropan oder Aminen, wie Ethylendiamin oder Hexamethylendiamin, als Starterkomponenten oder kationische Polymerisation und Copolymerisation cyclischer Ether, wie Tetrahydrofuran, Ethylenoxid und Propylenoxid mit sauren Katalysatoren erhalten werden. Die genannten Hydroxylverbindungen werden in bekannter Weise mit (cyclo)-aliphatischen Diisocyanaten im NCO/OH-Verhältnis von 2 : 1 zu den entsprechenden Präpolymeren mit endständigen NCO-Gruppen umgesetzt.

Als geeignete (cyclo)-aliphatische Polyisocyanate seien z. B. genannt: Hexamethylendiisocyanat, Isophorondiisocyanat (IPDI), 2,4,4-(2,2,4)-Trimethyl-1,6-diisocyanatohexan (TMDI), Methylen-bis-(4-cyclohexylisocyanat), Tetramethyl-m-xylylendiisocyanat, 1,4-Bis-isocyanatomethylcyclohexan, 2-Methyl-pentamethylendiisocyanat.

Die endständigen NCO-Gruppen der di- oder polyfunktionellen Präpolymeren werden anschließend mit den Piperidin-Derivaten (I) oder (II) bei 50 bis 100 °C so umgesetzt, daß pro NCO-Äquivalent ein Mol der Piperidin-Verbindung zur Reaktion gebracht wird.

Von den erfindungsgemäß eingesetzten Piperidin-Derivaten werden bevorzugt 2,2,6,6-Tetramethyl-4-dimethylaminopiperidin und 2,2,6,6-Tetramethyl-4-oxo-piperidin (TAA) eingesetzt.

Die Herstellung der NCO-Gruppen aufweisenden Präpolymeren sowie auch deren Blockierung kann in Substanz oder in gegenüber NCO-Gruppen inerten Lösungsmitteln durchgeführt werden.

Die erfindungsgemäß verwendbaren Polyepoxide sind Substanzen mit mehr als einer Epoxidgruppe; besonders bevorzugt sind Glycidylpolyether des Diphenylolpropans mit einem Epoxiwert zwischen 0,02 bis 0,6. Gegebenenfalls kann man den Polyepoxiden zur Herabsetzung der Viskosität reaktive Verdünner, wie z. B. Glycidylether, zusetzen.

Zusammen mit den Polyepoxiden werden erfindungsgemäß Polyamine eingesetzt. Als Beispiele für die verwendbaren Polyamine können genannt werden: Ethylendiamin, Diethylentriamin, Triethylentetramin, 2,2,4-(2,4,4)-Trimethylhexamethylendiamin, 1,4-Diaminocyclohexan, Isophorondiamin und 3,3'-Dimethyl-4,4'-diaminodicyclohexylmethan.

Die erfindungsgemäßen Mischungen enthalten zwischen 10 und 80 % der Verbindungen C).

Das Polyepoxid wird mit dem Polyamin im allgemeinen im Äquivalenzverhältnis umgesetzt. Da aber der Flexibilisator C auch mit dem Amin reagiert, muß das Polyamin in solchen Mengen zugesetzt werden, daß einmal eine stöchiometrische Härtung der Epoxidgruppen erfolgen kann, und zum anderen die blockierten NCO-Gruppen des Flexibilisators unter Bildung von Harnstoffgruppen reagieren können. Der Flexibilisator

kann sowohl dem Polyamin als auch dem Polyepoxid beigemischt werden. Zur Beschleunigung der Härtung können Katalysatoren eingesetzt werden, wie z. B. tertiäre Amine, Umsetzungsprodukte aus (substituierten) Phenolen mit Formaldehyd und Ammoniak (DMP(R) 30), wobei die zugesetzte Katalysatormenge bis zu 5 % betragen kann.

Die erfindungsgemäßen Mischungen eignen sich für Lacküberzüge und Gießharze, bei denen es auf besondere Elastizität ankommt.

Weiterhin sind die erfindungsgemäßen Mischungen zur Herstellung von 2 K-EP-Klebstoffen für konstruktive Verklebungen geeignet. Bei der Verklebung von Metallen z. B. geht man so vor, daß die einzelnen Komponenten - das blockierte NCO-Präpolymere, das Diamin und das Epoxidharz - bei Raumtemperatur gemischt werden und auf die zu verklebenden Metalle aufgetragen werden. Bis zum beendeten Abbinden müssen die verklebten Metalle fixiert werden. Es ist nicht erforderlich, das blockierte NCO-Präpolymere erst bei der Herstellung der Verklebungen dem Diamin/EP-Gemisch zuzudosieren, sondern es ist sogar vorteilhaft, das blockierte NCO-Präpolymere dem Diamin zuzugeben, das dann die eine Komponente der erfindungsgemäßen 2K-EP-Metallklebstoffe darstellt. Die mit dem erfindungsgemäßen Reaktionsgemisch bei RT verklebten Metalle zeichnen sich durch eine hohe Zugscherfestigkeit aus, die sogar bei 80 °C noch beträchtliche Werte erreicht.

A. Allgemeine Herstellungsvorschrift für die erfindungsgemäßen Verbindungen

Die blockierten NCO-Präpolymeren werden in zwei Stufen hergestellt. In der 1. Stufe erfolgt die Herstellung des NCO-Präpolymeren durch Reaktion des Polyols mit dem Diisocyanat im OH:NCO-Verhältnis von 1:2, dabei werden die Komponenten bei 80 °C so lange miteinander erhitzt, bis der NCO-Gehalt den berechneten Wert erreicht hat. Danach erfolgt in der 2. Stufe die Zugabe des Tetramethyl-piperidin-Derivats (bei 80 °C). Nach beendeter Blockierungsmittelzugabe wird das Reaktionsgemisch so lange bei 80 °C weiter erhitzt, bis der NCO-Gehalt < 0,3 % beträgt.

B. Herstellung von flexiblen, bei Raumtemperatur härtenden EP-Beschichtungen

I. Herstellung der Flexibilisatoren

Beispiel 1

2 000 Gew.-T. eines (linearen) Polyoxypropylenglykols mit einer OH-Zahl von 56 mg KOH/g wurden mit 444 Gew.-T. Isophorondiisocyanat bei 80 °C so lange erhitzt, bis der NCO-Gehalt des Reaktionsgemisches bei ca. 3,4 % lag. Danach wurden dem Reaktionsgemisch unter intensiver Rührung 282 Gew.-T. 2,2,4,6-Tetramethylpiperidin portionsweise zugegeben und so lange bei 80 °C weiter erhitzt, bis der NCO-Gehalt des Gemisches auf ca. 0,3 % gefallen war. Die Viskosität des Reaktionsproduktes betrug bei 25 °C 54 000 mPa•s.

Beispiel 2

3000 Gew.-T. eines (verzweigten) Polyoxypropylenglykols mit einer OH-Zahl von ca. 56 mg KOH/g wurden analog zum Beispiel 1 mit 666 Gew.-T. IPDI umgesetzt; in der 2. Stufe erfolgte dann wie im Beispiel 1 die Umsetzung mit 423 Gew.-T. 2,2,4,6-Tetramethylpiperidin. Das Reaktionsprodukt hatte bei 25 °C eine Viskosität von 35 000 mPa•s.

Beispiel 3

2 000 Gew.-T. eines linearen Polyoxypropylenglykols mit einer OH-Zahl von 56 mg KOH/g wurden mit 444 Gew.-T. IPDI bei 80 °C so lange erhitzt, bis der NCO-Gehalt 3,4 % erreicht hatte. Danach wurden 310 Gew.-T. TAA unter intensiver Rührung portionsweise zugegeben und ca. 4 h bei 80 °C weiter erhitzt. Das Reaktionsprodukt hatte eine Viskosität von 8 100 mPa•s und einen NCO-Gehalt < 0,3 %.

Beispiel 4

1 020 Gew.-T. eines verzweigten Polyoxypropylenglykols (OH-Z: 27,5 mg KOH/g) und 111 Gew.-T. IPDI wurden bei 80 °C so lange erhitzt, bis der NCO-Gehalt auf 1,7 % gefallen war. Danach wurden 77,5 Gew.-T. TAA unter intensiver Rührung portionsweise zugegeben und ca. 5 h bei 80 °C weiter erhitzt. Das

Reaktionsprodukt hatte eine Viskosität von 12 600 mPa•s und einen NCO-Gehalt < 0,3 %.

II. Flexibilisierung von EP-Harzen

1. Lacksysteme

Vergleichsbeispiel

Das NCO-Präpolymere mit 3,4 % NCO aus Beispiel B I.1 wurde anstelle von 2,2,4,6-Tetramethylpiperidin mit p-Nonylphenol blockiert. 28,9 Gew.-T. dieses mit Nonylphenol blockierten NCO-Präpolymeren, 14,4 Gew.-T. IPD und 56,6 Gew.-T. eines Epoxids auf Bisphenol-A-Basis mit einem EP-Äquivalentgewicht von 190 und 2 Gew.-T. p-Toluolsulfonsäuremethylester wurden miteinander gemischt und nach einer Reifezeit von ca. 10 Minuten auf Bleche aufgetragen und einmal bei Raumtemperatur (7 Tage) und zum anderen bei 120 °C (30 Minuten) gehärtet.

| Härtung | 7 Tage; Raumtemperatur | 120 °C; 30 Minuten |
|---|---|---|
| Aussehen der Filme: | milchig trüb, klebfrei, total spröde | klar, stark klebrig, flexibel |

Beispiel 1 (erfindungsgemäß)

28,9 Gew.-T. der erfindungsgemäßen Verbindung B I. 1 wurden mit 14,4 Gew.-T. IPD und 56,6 Gew.-T. des im Vergleichsbeispiel beschriebenen Epoxids und 2 Gew.-T. p-Toluolsulfonsäuremethylester intensiv gemischt und nach einer Reifezeit von ca. 10 Minuten auf Bleche aufgetragen. Im Gegensatz zu den im Vergleichsbeispiel erhaltenen Filmen waren diese klar und flexibel (sowohl die bei Raumtemperatur als auch die bei 120 °C gehärteten).

| Härtung | 7 Tage; Raumtemperatur | 120 °C; 30 Minuten |
|---|---|---|
| Aussehen der Filme: | klar, klebfrei, flexibel | klar, klebfrei, flexibel |

Die Lackdaten werden in der Tabelle 1 aufgeführt.

| | Gew.-%. | | | Lacktechnische Eigenschaften nach 7 Tagen, Raumtemperatur | | | | | | |
|---|---|---|---|---|---|---|---|---|---|---|
| Beisp. | Diamin | Flexibilisierg. | Epoxid * | SD | HK 1 | HK 3 | HK 7 | GS | ET | Imp. rev. |
| 1 | 14,4 IPD | 28,9 I.1 | 56,6 | 65-80 | 71 | 121 | 144 | 0 | 9,0 | >944,6 |
| 2 | 14,8 IPD | 26,3 I.1 | 58,8 | 55-70 | 95 | 146 | 168 | 1 | 0,4 | 460,7 |
| 3 | 27,7 IPD-Blend S | 13,9 I.1 | 58,2 | 60-70 | 66 | 137 | 152 | 1 | 9,8 | >944,6 |
| 4 | 14,6 TMD | 21 I.1 | 64,4 | 40-70 | 20 | 60 | 77 | 0 | >10 | >944,6 |
| 5 | 23,7 V 214 | 17 I.1 | 59,3 | 80-100 | 30 | 135 | 148 | 0 | >10 | >944,6 |
| 6 | 17,9 LAROMIN(R) C 260 | 34,2 I.1 | 47,8 | 30-45 | 44 | 132 | 143 | 0 | 9,8 | >944,6 |
| 7 | 14,3 IPD | 28,2 I.2 | 57,5 | 30-45 | 84 | 143 | 160 | 0 | >10 | >944,6 |

* = Epoxid auf Bisphenol-A-Basis mit einem EP-Äquivalentgewicht 190

Erklärungen zur Tabelle:

SD: Schichtdicke in µm

HK1,3,7: Härte nach König in sec (DIN 53 157) nach 1, 3, 7 Tagen

ET: Tiefung nach Erichsen in mm (DIN 53 156)

GS: Gitterschnittprüfung (DIN 53 151)

Imp. rev.: Impact reverse in g • m

Alle Beispiele mit Ausnahme Beispiel 3 enthielten noch 2 Gew.-T. p-Toluolsulfonsäuremethyleser als Katalysator.

IPD-Blend S: 50 Gew.-T. IPD, 44 Gew.-T. Benzylalkohol, 6 Gew.-T. Salicylsäure, V 214, Verkaufsprodukt der Hüls AG, aliphatisches Diamin, LAROMIN(R) C 260:

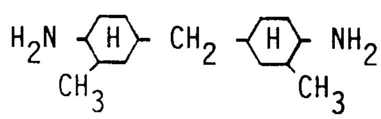

B II.2 Dickschichtsysteme

Beispiel 1

40 Gew.-T. des blockierten NCO-Präpolymeren aus Beispiel B.I.3 werden mit 15,9 Gew.-T. IPD gemischt. Zu dieser Mischung werden 60 Gew.-T. eines Epoxidharzes auf Bisphenol-A-Basis und Epichlorhydrin mit einem EP-Wert von 0,53 unter intensiver Rührung zugegeben, anschließend werden noch 2 Gew.-T. 2,4,6-Tris-(dimethylaminomethyl)-phenol (DMP$^{(R)}$ 30) zugefügt. Nach einer Reifezeit von 15 Minuten wurde das Reaktionsgemisch in Platten zu 4 mm Dicke gegossen und bei 23 °C härten gelassen. Nach 7 Tagen Härtung bei 23 °C wurden Zugfestigkeit, Dehnung (DIN 53 455), Weiterreißfestigkeit (DIN 53 515) sowie die Shore-Härte nach DIN 53 505 gemessen. Die gemessenen Daten sind in der nachfolgenden Tabelle zusammengefaßt. Die ausgehärtete Masse ist klar und transparent sowie klebfrei.

Beispiel 2

60 Gew.-T. des blockierten NCO-Präpolymeren aus Beispiel B.I.3, 40 Gew.-T. des EP-Harzes aus Beispiel B.II.2.1, 12,6 Gew.-T. IPD und 2 Gew.-T. DMP$^{(R)}$ 30 wurden analog zum Beispiel 1 in Platten zu 4 mm Dicke gegossen und 7 Tage härten gelassen und dann, wie im Beispiel 1 beschrieben, geprüft. Die gemessenen Daten finden sich in der nachfolgenden Tabelle.

Beispiel 3

80 Gew.-T. des blockierten NCO-Präpolymeren aus Beispiel B.I.3, 20 Gew.-T. des EP-Harzes aus Beispiel B.II.2.1, 8,4 Gew.-T. IPD und 2 Gew.-T. DMP$^{(R)}$ 30 werden analog zu Beispiel 1 in Platten zu 4 mm Dicke gegossen und 7 Tage bei 23 °C härten gelassen und dann, wie im Beispiel 1 beschrieben, geprüft. Die gemessenen Daten sind in der nachfolgenden Tabelle zusammengefaßt.

Beispiel 4

40 Gew.-T. des EP-Harzes aus Beispiel B.II.2.1, 60 Gew.-T. des blockierten NCO-Präpolymeren aus Beispiel B.I.4, 11 Gew.-T. IPD und 2 Gew.-T. DMP$^{(R)}$ 30 wurden analog zu Beispiel 1 in Platten zu 4 mm Dicke gegossen und 7 Tage bei 23 °C härten gelassen. Die gemessenen Daten sind in der nachfolgenden Tabelle zusammengefaßt.

Tabelle II

| Beisp. | Zugfestigkeit N/mm$^2$ DIN 53 504 | Bruchdehnung % DIN 53 504 | Weiterreißfestigkeit N/mm DIN 53 515 | Shore-D-Härte DIN 53 505 |
|---|---|---|---|---|
| 1 | 35,3 | 17 | nicht meßbar, da Probe beim Einspannen bricht | 78 |
| 2 | 15,4 | 40 | 24 | 57 |
| 3 | 5,3 | 184 | 11,1 | 75* |
| 4 | 13,5 | 94 | 55,3 | 55 |

* Shore-A-Härte

C. Verklebungen

Das flüssige EP-Harz, das blockierte NCO-Präpoylmere und IPD (+ 2 % DMP$^{(R)}$ 30) wurden intensiv gemischt, wobei die Reihenfolge der Mischungskomponenten beliebig sein konnte. Es hat sich aber als zweckmäßig erwiesen, IPD + DMP$^{(R)}$ 30 und das blockierte NCO-Präpolymere als eine Komponente einzusetzen. Nach erfolgtem Klebstoffauftrag wurden die Prüfbleche bis zum erfolgten Abbinden mit

Schraubzwingen fixiert. Nach 7 Tagen Härtung bei Raumtemperatur wurden die einschnittig überlappten Prüfbleche nach DIN 53 283 hinsichtlich ihrer Zugscherfestigkeit (ZSF; N/mm$^2$) bei Raumtemperatur und 80 ° C geprüft. Die Zusammensetzung des 2 K-EP-Klebstoffes sowie die ZSF der damit verklebten Stahlbleche werden in der nachfolgenden Tabelle aufgeführt.

Tabelle III:

| Beisp. | Zusammensetzung des 2 K-EP-Klebstoffs Gew.-T. | | | (ZSF Stahl/ Stahl) RT | 80 °C |
|---|---|---|---|---|---|
| 1 | 30 Gew.-T. Block-Präpolymer B.I.3 | 68,2 Gew.-T. Epikote 828 | 17 IPD* | 7 | 8 |
| 2 | 40 Gew.-T. Block-Präpolymer B.I.3 | 65,6 Gew.-T. Epikote 828 | 17 IPD* | 18 | 11 |
| 3 | 50 Gew.-T. Block-Präpolymer B.I.3 | 63 Gew.-T. Epikote 828 | 17 IPD* | 19 | 10 |

* Alle Gemische enthalten jeweils 2 Gew.-T. DMP(R) 30

**Patentansprüche**

**1.** Bei Raumtemperatur härtbare Epoxidharzmischungen, bestehend aus

(A) Polyepoxiden mit mehr als einer Epoxidgruppe pro Molekül

(B) aliphatischen, (cyclo)-aliphatischen Polyaminen mit mehr als zwei am Stickstoff der Aminogruppen gebundenen aktiven Wasserstoffatomen,

(C) einem Umsetzungsprodukt mit einem mittleren Molekulargewicht von 500 bis 8 000 aus

c 1) einem Polyalkylenetherpolyol aus Alkylenoxiden und/oder bi- oder polyfunktionellen Alkoholen bzw. aus Alkylenoxiden und Aminen mit

c 2) einem (cyclo)-aliphatischen Diisocyanat im NCO/OH-Verhältnis von 2 : 1,

blockiert mit einem Piperidin-Derivat der folgenden Formeln

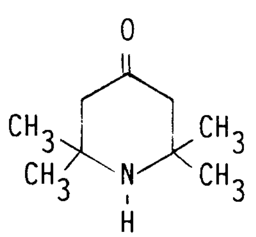 (I) oder 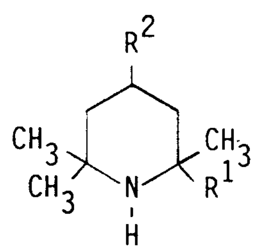 (II)

wobei $R^1$ = H, $CH_3$

$$R^2 = H,\ OH,\ (-O)_n-R^3,\ (-O-\overset{O}{\overset{\|}{C}})_n-R^3,\ -\underset{H}{\underset{|}{N}}-\overset{O}{\overset{\|}{C}}-R^3,\ -N(CH_3)_2,$$

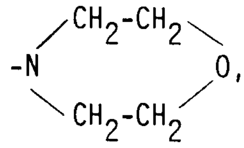,

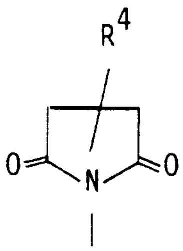 , 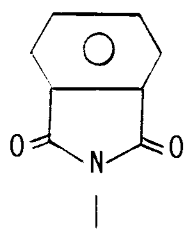 , 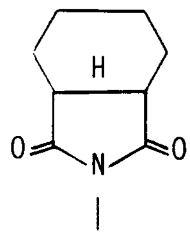 ,

n = 1,2
$R^3$ = $C_1-C_{18}$-Alkyl, wenn n = 1 und
$R^3$ = $C_2-C_{18}$-Alkylen, wenn n = 2
$R^4$ = H, $C_1$-$C_{20}$-Alkyl und gegebenenfalls
D) üblichen Füllstoffen, Pigmenten, Reaktionsbeschleunigern und Viskositätsreglern.